# EUROPÄISCHE PATENTSCHRIFT

(11) **EP 4 124 884 B1**
(45) Veröffentlichungstag und Bekanntmachung des Hinweises auf die Patenterteilung: **17.01.2024**
(21) Anmeldenummer: 22185187.6
(22) Anmeldetag: 15.07.2022
(51) Int. Cl.: G01S 7/481, G01S 17/04, G01S 17/48, G02B 1/00

(54) **OPTOELEKTRONISCHER SENSOR UND VERFAHREN ZUR ERFASSUNG EINES OBJEKTS NACH DEM PRINZIP DER TRIANGULATION**
OPTOELECTRONIC SENSOR AND METHOD FOR DETECTING AN OBJECT ACCORDING TO THE PRINCIPLE OF TRIANGULATION
CAPTEUR OPTOÉLECTRONIQUE ET PROCÉDÉ DE DÉTECTION D'UN OBJET SELON LE PRINCIPE DE TRIANGULATION

(30) Priorität: 27.07.2021 DE 102021119423
(43) Veröffentlichungstag der Anmeldung: 01.02.2023
(73) Patentinhaber: SICK AG, 79183 Waldkirch (DE)
(72) Erfinder: Ringwald, Siegfried, 79215 Elzach (DE)

(56) Entgegenhaltungen:
- EP-B1- 3 002 609
- DE-A1- 10 220 037
- DE-B3-102015 119 668
- US-A1- 2020 284 883
- US-A1- 2021 066 893
- ORAD RESHEF ET AL: "An optic to replace space and its application towards ultra-thin imaging systems", ARXIV.ORG, CORNELL UNIVERSITY LIBRARY, 201 OLIN LIBRARY CORNELL UNIVERSITY ITHACA, NY 14853, 11. Juni 2021 (2021-06-11), XP081974600, DOI: 10.1038/S41467-021-23358-8
- KIM INKI ET AL: "Nanophotonics for light detection and ranging technology", NATURE NANOTECHNOLOGY, NATURE PUB. GROUP, INC, LONDON, vol. 16, no. 5, 1 May 2021 (2021-05-01), pages 508-524, XP037452045, ISSN: 1748-3387, DOI: 10.1038/S41565-021-00895-3 [retrieved on 2021-05-06]

## Beschreibung

Die Erfindung betrifft einen optoelektronischen Sensor und ein Verfahren zur Erfassung eines Objekts in einem Überwachungsbereich nach dem Prinzip der Triangulation nach dem Oberbegriff von Anspruch 1 beziehungsweise 11.

Das Prinzip der optischen Triangulation beruht darauf, einen Lichtsender und einen ortsauflösenden Lichtempfänger um einen bekannten Basisabstand gegeneinander versetzt anzuordnen. Sende- und Empfangslichtstrahl stehen dann in einem Winkel zueinander, was dazu führt, dass der Empfangslichtfleck auf dem Empfänger in Abhängigkeit von dem Abstand zu dem angetasteten Objekt wandert. Die Position des Empfangslichtflecks auf dem ortsauflösenden Lichtempfänger ist demnach ein Maß für den Objektabstand.

Bei der Triangulation wird tastend gemessen, das Licht also bis auf den Triangulationsversatz am im Wesentlichen gleichen Ort ausgesandt und empfangen. Deshalb werden solche Sensoren als Lichttaster oder Triangulationstaster bezeichnet. Ein alternativer Begriff ist Reflexionslichtschranke, wobei dazu der Gegenbegriff eine Einweglichtschranke mit einem Lichtempfänger gegenüber dem Lichtsender mit der Überwachungsstrecke dazwischen wäre.

Es gibt nicht nur messende Triangulationstaster, die in der skizzierten Weise einen Abstand bestimmen und ausgeben, sondern auch schaltende Systeme nach dem Triangulationsprinzip, deren Schaltverhalten von dem Objektabstand abhängt. Zu diesen Sensoren gehören die hintergrundausblendenden Lichttaster. Sie sind schaltend, geben also lediglich ein binäres Objektfeststellungsignal als entsprechende Schaltzustände aus. Zugleich wird aber der Aufbau eines Triangulationstasters ausgenutzt, um mit einem zumindest in einen Nah- und einen Fernbereich ortsauflösenden Lichtempfänger zwei Empfangssignale zu erzeugen. Diese werden gemeinsam ausgewertet, beispielsweise deren Differenz mit einer Schaltschwelle bewertet, um so die Objekterfassung auf einen bestimmten Entfernungsbereich zu beschränken und Empfangssignale von Objekten außerhalb dieses Entfernungsbereichs als Hintergrundsignal auszublenden. Ein hintergrundausblendender Lichttaster ist beispielsweise in der DE 197 21 105 C2 offenbart, wobei hier zusätzlich Schalter vorgesehen sind, um die einzelnen Elemente eines ortsauflösenden Lichtempfängers auf veränderliche Weise dem Nah- oder Fernbereich zuzuordnen. Die DE 199 62 701 A1 beschreibt einen Lichttaster mit einem virtuellen Trennsteg.

Bei der Triangulation ist die Winkelinformationen der auf die Empfängerlinse einfallenden Strahlengänge ein wesentliches Maß für die Distanzermittlung, denn dies übersetzt sich in die ausgewertete abstandsabhängige Auftreffposition des Empfangslichtflecks. Die Beziehung zwischen Objektabstand und Verschiebung des Empfangslichtflecks auf dem Lichtempfänger ist jedoch nichtlinear, die Winkelsensibilität reduziert sich annähernd quadratisch mit zunehmendem Objektabstand. Abstandsänderungen im Nahbereich führen zu großen, im Fernbereich dagegen nur zu kleinen Verschiebungen des Empfangslichtflecks. Zugleich ist der Empfangslichtfleck kein idealer mathematischer Punkt und dessen Ausdehnung zudem erneut vom Objektabstand abhängig, da die Empfangsoptik nicht den gesamten Abstandsbereich scharf abbilden kann. In der Regel wird nur aus dem Fernbereich eine scharfe Abbildung erzielt, zum Nahbereich hin wird der Empfangslichtfleck zunehmend unschärfer und damit größer. Schließlich nimmt auch die empfangene Lichtenergie oder der Empfangspegel annähernd quadratisch mit dem Objektabstand ab. Die Messung ist daher im Nahbereich sehr empfindlich und im Fernbereich sehr unempfindlich. All dies führt zu Messungenauigkeiten und im Falle von hintergrundausblendenden Lichttastern zu einer Schaltpunktabweichung und damit zumindest manchmal zum Fehlschalten. Die Empfindlichkeitsdynamik ließe sich durch teure Komponenten wie APDs (Avalanche Photodiode, Lawinenphotodiode) oder SPADs (Single-Photon APD, Einzelphotonlawinendiode) mit entsprechend aufwändiger Schaltungstechnik und Elektronik womöglich noch verarbeiten. Trotz der damit höheren Kosten würde das die beiden anderen ungünstigen Effekte nicht beheben, die weiterhin die Messgenauigkeit begrenzten.

Zu optischen Distanzmessung ist neben der Triangulation auch die Lichtlaufzeitmessung bekannt. Hier sind Empfindlichkeit und Messgenauigkeit weniger vom Abstand abhängig. Damit würde aber das Triangulationsprinzip nicht verbessert, sondern ersetzt. Beispielweise wegen hoher Genauigkeit gerade im Nahbereich, aber auch wegen der völlig unterschiedlichen Anforderungen an die Elektronik und Optik, verliert die Triangulation wegen der geschilderten Problematik keineswegs ihre Berechtigung neben der Lichtlaufzeitmessung.

Es gibt im Stand der Technik weiterhin Ansätze, die Empfangsoptik zu verbessern, um die Linearität der Triangulation zu verbessern oder den Messbereich für besonders nahe Objekte zu erweitern. Beispielsweise nutzt die DE 102 20 037 C5 eine zusätzliche Nahbereichslinse, die das Empfangslicht umso stärker in Richtung des Lichtsenders bricht, je näher sich das Objekt befindet. Die Nahbereichslinse vergrößert den Bauraumbedarf weiter und führt nur zu teilweisen Verbesserungen im Nahbereich.

Die DE 10 2008 014 912 A1 ordnet zwischen der Empfängerlinse und dem Lichtempfänger eine zusätzliche Korrekturlinse an. Dadurch wird der von der Empfängerlinse gebündelte Lichtstrahl gezielt so umgelenkt, dass es zu einer größeren Beabstandung der auftreffenden Lichtstrahlen auf dem Lichtempfänger und zu einer scharfen Abbildung kommt. Tatsächlich ist das aber mit einer Korrekturlinse, die den gesamten Empfangsstrahlengang beeinflusst, gar nicht möglich, sondern es wird allenfalls eine Teilverbesserung für einen gewissen Abstandsbereich erzielt.

Die DE 10 2015 119 668 B3 schlägt ein weiter verbessertes optisches Element zwischen Lichtempfänger und Empfangsoptik vor, das eine optimierte Freiformgestalt mit einem konvergierenden und einem divergierenden Teilbereich aufweist. Damit wird eine verbesserte Korrektur erzielt. Die Verbesserungen sind jedoch für hohe Ansprüche an die Triangulation noch nicht ausreichend.

Aus der EP 3 002 609 B1 ist ein Triangulationstaster bekannt, dessen Hauptlinse eine Korrekturbeschichtung aufweist. Damit wird eine Korrektur von Aberrationen und ein Ausgleich der starken Ablenkung des Lichts bei einem Objekt im Nahbereich geschaffen.

Die Arbeit von Reshef, Orad, et al. "An optic to replace space and its application towards ultra-thin imaging systems", Nature communications 12.1 (2021): 1-8 befasst sich ohne jeden Zusammenhang mit optischer Triangulation mit sogenannten Metalinsen und Spaceplates. Metalinsen sind extrem dünne optische Elemente mit Linseneffekt, die spezielle Nanostrukturen aufweisen, um Strahlwege zu beeinflussen. Spaceplates wiederum zielen mit ähnlichen Technologien auf den Bereich zwischen den Linsen, denn auch mehrere Metalinsen müssen zunächst wie klassische Linsen einen Abstand zueinander einhalten. Diesen Abstand sollen die Spaceplates verringern, um die Bautiefe einer Optik weiter reduzieren zu können.

Die US 2020/284883 A1 beschreibt optische Elemente für ein LIDAR-Sensorsystem. In einer Ausführungsform wird mit zwei Laserlichtquellen unterschiedlicher Wellenlänge und zugeordneten Photodetektoren simultan abgetastet. Die empfangsseitige Trennung der Lichtstrahlen erfolgt dabei mittels Nanostrukturen insbesondere einer Metaoberfläche.

In der US 2021/0066893 A1 wird ein VCSEL-Array in einer LIDAR-Vorrichtung vorgestellt. Es wird erwähnt, dass die LIDAR-Vorrichtung anstelle eines Lichtlaufzeitverfahrens andere Distanzmessungen einschließlich der Triangulation nutzen kann. Zur direkten Auskopplung eines Teilstrahls auf den Detektor ist in einer Ausführungsform eine Optik vorgesehen, die unter anderem als Metaoberfläche ausgebildet sein kann.

Es ist daher Aufgabe der Erfindung, die optische Triangulation weiter zu verbessern. Diese Aufgabe wird durch einen optoelektronischen Sensor nach dem Prinzip der Triangulation zur Erfassung eines Objekts in einem Überwachungsbereich und ein Verfahren zur Erfassung eines Objekts in einem Überwachungsbereich nach dem Prinzip der Triangulation nach Anspruch 1 beziehungsweise 11 gelöst. Der Sensor, ein Lichttaster nach dem Triangulationsprinzip, weist einen Sendepfad auf, in dem ein Lichtsender über eine Sendeoptik ein Lichtbündel aussendet, sowie einen Empfangspfad, in dem das an einem Objekt remittierte Lichtbündel über eine Empfangsoptik in einem Lichtempfänger detektiert wird. Das remittierte Lichtbündel kann sowohl durch diffuse Remission als auch durch gerichtete Reflexion entstehen. Sendepfad und Empfangspfad sind um einen Basisabstand zueinander versetzt, vorzugsweise gemessen an einem Abstand zwischen den optischen Achsen von Empfangsoptik und Sendeoptik. Aufgrund des Basisabstands oder der Triangulationsbasis ist die Auftreffposition des Empfangslichtflecks, den das remittierte Lichtbündel auf dem Lichtempfänger erzeugt, von dem auch als Tastweite bezeichneten Abstand des Objekts abhängig, und deshalb kann der Objektabstand trianguliert werden. Der Lichtempfänger weist in Richtung der abstandsabhängigen Veränderung der Auftreffposition eine Ortsauflösung auf, ist beispielsweise als Empfängerzeile mit wenigstens zwei Lichtempfangselementen oder als Matrix von Lichtempfangselementen aufgebaut, von denen dann möglicherweise eine oder mehrere Zeilen in der passenden Richtung ausgewählt und verwendet werden.

Ein Empfangssignal des Lichtempfängers wird ausgewertet. Das Ziel dieser Auswertung ist je nach Ausführungsform unterschiedlich. Anhand der Auftreffposition des Empfangslichtflecks kann ein Objektabstand gemessen werden. Die Auswertung kann lediglich feststellen, ob überhaupt ein Objekt detektiert wird, oder es wird anhand der Auftreffposition ein bestimmter Abstandsbereich festgelegt und ausgewertet, ob ein Objekt in diesem Abstandsbereich detektiert wird.

Die Erfindung geht von dem Grundgedanken aus, in dem Empfangspfad ein optisches Metaelement vorzusehen. Das Metaelement wirkt je nach Ausführungsform in verschiedener Weise auf das remittierte Lichtbündel und ersetzt und/oder ergänzt die Empfangsoptik. Das Metaelement weist dafür eine Metaoberfläche und/oder ein Metamaterial auf, d.h. Nanostrukturen, die ganz gezielt bestimmte Wellenfronten des remittierten Lichtbündels formen. Bei einer Metaoberfläche sind solche Nanostrukturen an der Oberfläche vorgesehen, ein Metamaterial erreicht entsprechende Eigenschaften durch die Nanostruktur eines Schichtsystems oder eines Vollkörpers.

Die Erfindung hat den Vorteil, dass die einleitend geschilderten Nachteile eines Triangulationssensors deutlich verbessert werden können. Das betrifft eine Vielzahl von Sensoreigenschaften, die teilweise oder insgesamt adressiert werden. Durch eine verbesserte Empfangsoptik ist die Auftreffposition über einen großen Abstandsbereich schärfer definiert und kann genauer bestimmt werden. Das führt zu einer Verbesserung von Messgenauigkeit und Empfindlichkeit über Nah- und Fernbereich. Bei schaltenden Systemen, wie hintergrundausblendenden Lichttastern, erlaubt dies einen präziser eingehaltenen Schaltpunkt und verhindert Fehlschalten. Gerade für eine höhere Empfindlichkeit im Fernbereich würde mit einer herkömmlichen Linse bei dann größerer Brennweite ein entsprechender Bauraum benötigt, und erst durch das erfindungsgemäß verwendete Metaelement ist eine weitere Miniaturisierung möglich.

Das optische Metaelement weist bevorzugt eine Metalinse auf. Dabei wird auf einem flachen, lichtdurchlässigen Trägermaterial eine Metaoberfläche an der Vorder- und/oder Rückseite angeordnet. Die Nanostruktur der Metaoberfläche ist so ausgebildet, dass das remittierte Lichtbündel unter gewünschten Linseneigenschaften geformt wird. Eine Metalinse kann statt eines einfachen Trägermaterials ein Metamaterial aufweisen.

Das optische Metaelement weist bevorzugt eine Spaceplate auf. Ein deutscher Fachbegriff hat sich hierfür noch nicht herausgebildet. Eine Spaceplate ist ein Beispiel für ein Metamaterial, wobei diese nicht primär auf eine Veränderung der Wellenfront entsprechend einem Linseneffekt angelegt ist. Vielmehr soll gleichsam ein längerer Lichtweg auf kleinerem physischem Raum verwirklicht werden, um optische Elemente, insbesondere Metalinsen, näher beieinander anordnen zu können. Eine Spaceplate oder ein sonstiges Metamaterial kann an der Vorder- und/oder Rückseite mit einer Metaoberfläche versehen werden, um die Effekte einer Spaceplate und einer Metalinse zu kombinieren.

Für weitere Einzelheiten zu Spaceplates wird ergänzend auf die einleitend genannte Arbeit von Reshef et al. verwiesen.

Das optische Metaelement weist bevorzugt mindestens teilweise die Funktion der Empfangsoptik auf. Diese Funktion ist vorzugsweise, das remittierte Lichtbündel auf den Lichtempfänger zu führen, und zwar derart, dass ein Empfangslichtfleck an eine gemäß dem Triangulationsprinzip dem Objektabstand entsprechenden Position auf dem Lichtempfänger entsteht. Mindestens teilweise kann in einem doppelten Sinne verstanden werden, es kann sowohl weitere optische Elemente der Empfangsoptik geben als auch das Metaelement weitere Funktionen über solche der Empfangsoptik hinaus übernehmen. Vorzugsweise wird die Empfangsoptik vollständig ersetzt, es sind also keine weiteren optischen Elemente wie Linsen und dergleichen der Empfangsoptik erforderlich.

Der Sensor weist ein optisches Korrekturelement in dem Empfangspfad auf das einen Triangulationseffekt zumindest teilweise vergleichmäßigt, nämlich eine Auftreffposition eines Empfangslichtflecks auf dem Lichtempfänger, eine Empfangslichtfleckgröße und/oder einen Empfangspegel, jeweils in Abhängigkeit von dem Abstand des Objekts. Der Triangulationseffekt, auf dem eine Triangulation basiert, ist die mit dem Objektabstand variierende Auftreffposition auf dem Lichtempfänger. Wie einleitend schon kurz skizziert, verhält sich dies aber nicht so gutmütig über den gesamten Abstandsmessbereich, wie dies für eine hochgenaue Messung erwünscht wäre. Das optische Korrekturelement dient dazu, einer solchen Idealsituation zumindest näher zu kommen. Dazu können mindestens drei zu vergleichmäßigende Störeffekte genannt werden. Erstens variiert die Auftreffposition in Nahbereich sehr stark mit Änderungen des Objektabstands, im Fernbereich aber kaum noch. Vergleichmäßigen bedeutet hier, Messempfindlichkeit im Nahbereich zugunsten des Fernbereichs aufzugeben, wobei eine Linearisierung das anzustrebende, wenn auch in der Praxis nicht erreichbare Ideal darstellt. Zweitens verändert sich der Durchmesser des von dem remittierten Lichtbündel erzeugten Empfangslichtflecks mit dem Objektabstand. Nur für einen bestimmten Abstandsbereich, typischerweise den Fernbereich oder ein Objekt im Unendlichen, wird ein punktförmiger beziehungsweise scharf abgebildeter Empfangslichtfleck erzeugt. Im Nahbereich wird der Empfangslichtfleck zunehmend größer, ist dadurch schlechter zu lokalisieren und überstrahlt auch den Lichtempfänger. Das optische Korrekturelement soll hier für eine wenigstens schärfere Abbildung, ideal einen überall punkförmigen oder zumindest gleich großen Empfangslichtfleck sorgen. Drittens ist der Empfangspegel im Nahbereich übersteuert und im Fernbereich zu schwach. Anzustreben wäre hier ein überall gleicher Empfangspegel. Beispielsweise kann das optische Korrekturelement den Empfangslichtfleck mit abnehmendem Objektabstand weiter quer zur Richtung von dessen abstandsabhängiger Wanderbewegung aufziehen. Im Nahbereich verfehlt damit ein zunehmender Anteil den Lichtempfänger, was für einen geringeren Empfangspegel sorgt. Das optische Korrekturelement vergleichmäßigt den Triangulationseffekt hinsichtlich zumindest einem dieser Störeffekte. Wie sogleich erstmals und im Folgenden noch mehrfach zu sehen sein wird, muss das optische Korrekturelement erfindungsgemäß kein separates, zusätzliches Bauteil sein.

Das optische Metaelement weist wenigstens teilweise die Funktion des optischen Korrekturelements auf. Die soeben erläuterte Vergleichmäßigung des Triangulationseffekt erfolgt dann nicht durch eine refraktive Korrekturlinse oder dergleichen, sondern durch das optische Metaelement. Wenigstens teilweise hat wieder die mögliche Doppelbedeutung, dass es weitere optische Elemente für eine Vergleichmäßigung des Triangulationseffekt geben kann und/oder das optische Metaelement weitere Funktionen neben einer Vergleichmäßigung des Triangulationseffekt übernehmen kann. Vorzugsweise leistet jedoch das optische Metaelement die Funktion des optischen Korrekturelements allein.

Das optische Metaelement weist bevorzugt eine Brennweite auf, die mit dem Einfallswinkel variiert, insbesondere monoton. Die Nanostrukturen des optischen Metaelements werden sinnvollerweise nicht strukturell, sondern funktional beschrieben. Es kommt in der Praxis nicht darauf an, welche konkrete Nanostruktur geschaffen wird, sondern dass die gewünschten optischen Eigenschaften erzielt werden. Dabei gibt es auch vielfältigstes unterschiedliche Umsetzungsmöglichkeiten, also Nanostrukturen, die eine angestrebte optische Wirkung gleichermaßen erfüllen. Der Einfallswinkel korrespondiert wegen der Triangulationsanordnung von Sende- und Empfangspfad mit dem Objektstabstand. Eine klassische Linse würde für das einfallende remitterte Lichtbündel nur eine einheitliche Brennweite aufweisen, was dann aber zu den diskutierten Störeffekten und Nichtlinearitäten führt. Eine mit dem Einfallswinkel variierende Brennweite sorgt damit für eine erwünschte Vergleichmäßigung eines Triangulationseffekts. Die Brennweite hängt vorzugsweise monoton vom Einfallswinkel ab, so dass auf das remittierte Lichtbündel bei steilerem Einfallswinkel eine stärkere Brennweite wirkt oder umgekehrt. Die Richtung zunehmender oder abnehmender Brennweite dieser vorzugsweise monotonen Beziehung hängt von der Auslegung des Sensors ab. Konkret kann eine derart variable Brennweite die Auftreffposition durch stärkere oder schwächere Umlenkung korrigieren, gemäß dem oben unter erstens diskutierten Störeffekt, sowie gemäß dem oben unter zweitens diskutierten Störeffekt nachfokussieren, um den Durchmesser des Empfangslichtflecks zu begrenzen. Ferner wäre gemäß dem unter drittens diskutierten Störeffekt eine vom Einfallswinkel abhängige elliptische Wirkung denkbar, die den Empfangslichtfleck in Querrichtung unterschiedlich stark aufzieht.

Das optische Metaelement fokussiert bevorzugt das remittierte Lichtbündel für alle über eine Reichweite des Sensors auftretenden Einfallswinkel in die Lichtempfängerebene. Das Metaelement übernimmt damit eine mögliche Funktion des optischen Korrekturelements. Die Designanforderung an die Auslegung der Nanostrukturen des optischen Metaelements ist hier, dass für alle Einfallswinkel, die in der Triangulationsanordnung mit dem Objektabstand korrespondieren, eine scharfe Abbildung in die Lichtempfängerebene erreicht wird. Dies lässt sich insbesondere mit einer Brennweite erreichen, die vom Einfallswinkel abhängt. Alle Einfallswinkel meint dabei denjenigen Winkelbereich, der Objektabständen in einem Messbereich oder innerhalb einer Reichweite des Sensors entspricht.

Das Metaelement weist bevorzugt ein erstes Teilelement für eine wenigstens teilweise Linearisierung der Abhängigkeit der Auftreffposition von einem Abstand des Objekts und ein zweites Teilelement für eine wenigstens teilweise Vergleichmäßigung einer Empfangslichtfleckgröße bei unterschiedlichen Abständen des Objekts auf. Die beiden oben unter erstens und zweitens diskutierten Vergleichmäßigungen eines optischen Korrekturelements werden hier auf zwei Teilelemente verteilt. Das erste Teilelement sorgt für eine zumindest eher lineare Abstandsabhängigkeit des Triangulationsversatzes auf dem Lichtempfänger, das zweite Teilelement für eine möglichst abstandsunabhängige Fokussierung.

Das optische Metaelement weist bevorzugt wenigstens teilweise die Funktion sowohl der Empfangsoptik als auch des optischen Korrekturelements auf. Das optische Metaelement erzeugt damit in Funktion der Empfangsoptik den Empfangslichtfleck auf dem Lichtempfänger und leistet zugleich eine optische Korrektur, um durch Vergleichmäßigung zumindest einen der oben genannten Störeffekte zu abzumildern. Wenigstens teilweise hat auch hier den doppelten Sinn, dass Empfangsoptik und/oder optisches Korrekturelement weitere optische Elemente aufweisen können sowie dass das optische Metaelement noch mehr Funktionen abdecken kann. Besonders bevorzugt ist das optische Metaelement Empfangsoptik und optisches Korrekturelement in einem, es gibt dann im Empfangspfad keine weiteren optischen Elemente.

Die Sendeoptik weist bevorzugt ein zweites optisches Metaelement auf. In dieser Ausführungsform ist auch im Sendepfad ein optisches Metaelement vorgesehen, dass eine beispielsweise refraktive herkömmliche Sendeoptik ersetzt oder ergänzt. Ein optisches Korrekturelement ist im Sendepfad nicht erforderlich, der Triangulationseffekt tritt empfangsseitig auf. Die Funktion der Sendeoptik ist die Erzeugung eines abgegrenzten Lichtbündels beispielsweise durch Kollimieren. Alternativ zu einer Ausführungsform mit einem zweiten optischen Metaelement kann der Sendepfad doch eine refraktive Sendelinse oder dergleichen aufweisen. Besonders bevorzugt sind das optische Metaelement und das zweite optische Metaelement als gemeinsames Metaelement ausgebildet. Das gemeinsame Metaelement kann dann die gesamte Optik darstellen und als Sendeoptik, Empfangsoptik und optisches Korrekturelement zugleich fungieren. Alternativ sind ergänzende zusätzliche optische Elemente vorstellbar.

Der Sensor ist bevorzugt als hintergrundausblendender Lichttaster ausgebildet, bei dem der Lichtempfänger einen Nahbereich und einen Fernbereich mit einem Trennsteg dazwischen aufweist und der insbesondere einen Schaltausgang aufweist, dessen Schaltzustand davon abhängt, ob ein Objekt im Nahbereich erfasst ist oder davon, ob ein Objekt im Fernbereich erfasst ist. Das Funktionsprinzip eines hintergrundausblendenden Lichttasters wurde einleitend kurz erläutert. Hintergrundausblendenden bedeutet, dass Objekte nur in einem bestimmten Abstandsbereich detektiert und außerhalb dieses Abstandsbereichs ignoriert werden, wobei der interessierende Abstandsbereich meist der Nahbereich ist, aber auch der Fernbereich oder ein sonstiger Abstandsbereich sein kann. Von der Lage des Trennstegs hängt ab, welche Signale als Hintergrund ausgeblendet werden. Der Trennsteg kann die physische Trennlinie zwischen einem Nah- und einem Fernempfangselement sein. Häufig ist ein virtueller Trennsteg gemeint, der elektronisch verstellbar ist, indem Einzellichtempfänger durch einfaches oder gewichtetes Zusammenschalten zu dem Nah- und Fernelement verbunden werden. Durch solche Gewichtungen ist sogar eine Verschiebung des Trennstegs mit Subpixelauflösung möglich.

Das erfindungsgemäße Verfahren kann auf ähnliche Weise weitergebildet werden und zeigt dabei ähnliche Vorteile. Derartige vorteilhafte Merkmale sind beispielhaft, aber nicht abschließend in den sich an die unabhängigen Ansprüche anschließenden Unteransprüchen beschrieben.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1: ein Blockschaltbild eines optoelektronischen Sensors nach dem Triangulationsprinzip;
- Fig. 2: eine Prinzipdarstellung zur Erläuterung der optischen Triangulation und der Triangulationsdynamik, d.h. der unterschiedlichen Empfindlichkeit für Abstandsänderungen im Nah- und Fernbereich,
- Fig. 3: eine weitere Prinzipdarstellung zur Erläuterung der Triangulationsdynamik;
- Fig. 4: eine schematische Darstellung der Triangulationsdynamik in Abhängigkeit von dem Objektabstand;
- Fig. 5: eine Prinzipdarstellung zur Erläuterung der unterschiedlichen Empfangslichtfleckgröße je nach Objektabstand;
- Fig. 6: eine schematische Darstellung einer Triangulationsanordnung mit einem optischen Metaelement im Empfangspfad, das die Triangulationsdynamik und Größe des Empfangslichtflecks korrigiert;
- Fig. 7: eine schematische Darstellung ähnlich Figur 6, in der das optische Metaelement in zwei Teilelemente aufgeteilt ist; und
- Fig. 8: eine schematische Darstellung, in der die unkorrigierte Triangulationsdynamik gemäß Figur 4 mit der durch ein optisches Metaelement korrigierten Triangulationsdynamik verglichen wird.

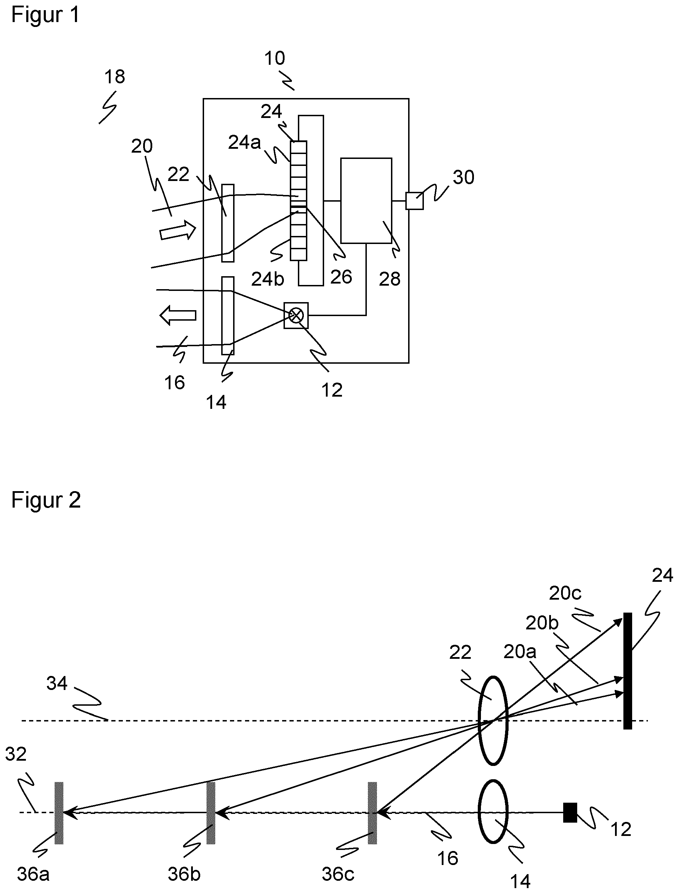

Figur 1 zeigt eine schematische Schnittdarstellung eines optoelektronischen Sensors 10 nach dem Triangulationsprinzip, der hier beispielhaft als hintergrundausblendender Lichttaster ausgebildet ist. Ein Lichtsender 12 sendet über eine strahlformende Sendeoptik 14 ein Lichtbündel 16 in einen Überwachungsbereich 18 aus. Fällt das Lichtbündel 16 in dem Überwachungsbereich 18 auf ein Objekt, so gelangt ein Teil davon als remittiertes Lichtbündel 20 zurück zu dem Sensor 10. Das remittierte Lichtbündel 20 wird von einer Empfangsoptik 22 auf einen Lichtempfänger 24 geführt, der daraus ein elektrisches Empfangssignal erzeugt. Sendeoptik 14 und Empfangsoptik 22 sind rein schematisch als Kästchen dargestellt, um ihren konkreten Aufbau vorerst offen zu lassen. Erfindungsgemäß sind sie wenigstens teilweise durch ein optisches Metaelement verwirklicht, wie später noch erläutert wird.

In der dargestellten Ausführungsform des Sensors 10 ist eine Hintergrundausblendung vorgesehen. Deshalb ist der Lichtempfänger 24 in ein Nahbereichselement 24a und ein Fernbereichselement 24b unterteilt. Für die Hintergrundausblendung wird per Werkseinstellung, Parametrierung oder Einlernen ein Trennsteg 26 definiert, der die einzelnen Lichtempfangselemente oder Pixel des Lichtempfängers 24 in zwei Gruppen und damit den Lichtempfänger 24 in das Nah- und das Fernbereichselement 24a-b unterteilt. Die Lage des Trennstegs 26 kann elektronisch veränderbar sein, und dies auch subpixelgenau.

Der Auftreffort des remittierten Lichtbündels 20 beziehungsweise des davon erzeugten Empfangslichtflecks auf dem Lichtempfänger 24 hängt wegen der Triangulationsanordnung in dem Sensor 10 von der Entfernung des angetasteten Objekts ab, an dem das remittierte Lichtbündel 20 zurückgeworfen wird. Der Versatz zwischen Lichtsender 12 und Lichtempfänger 24 beziehungsweise von Sendeoptik 14 und Empfangsoptik 22 bildet eine Triangulationsbasis. Das führt insbesondere dazu, dass der Empfangslichtfleck von einem fernen Objekt auf dem Fernbereichselement 24b und von einem nahen Objekt auf dem Nahbereichselement 24a registriert wird. Der Trennsteg 26 entscheidet darüber, welche Objekte als nahe Objekte oder ferne Objekte anzusehen sind.

Eine Auswertungseinheit 28 ist mit dem Lichtempfänger 24 verbunden, um aus den elektrischen Empfangssignalen je nach Anwesenheit eines Objekts im Nahbereich ein Objektfeststellungssignal zu bestimmen, das an einem Schaltausgang 30 ausgegeben wird. Die Auswertungseinheit 28 bildet zur Hintergrundausblendung beispielsweise die Differenz zwischen dem Signal des Nahbereichselements 24a und des Fernbereichselements 24b und bewertet diese Differenz mit einer Schwelle. Dementsprechend wird an einem Schaltausgang 30 ein Schaltsignal erzeugt, dass eine Objektfeststellung anzeigt, wenn ein Objekt im Nahbereich detektiert wird, und keine Objektfeststellung, wenn kein Objekt oder nur ein Objekt im auszublendenden Fernbereich detektiert wird. Die Auswertungseinheit 28 steuert außerdem den Lichtsender 12.

Der Lichtempfänger 24 in Figur 1 ist eine Empfängerzeile mit einer Vielzahl von zu einer Zeile angeordneten Lichtempfangselementen oder Pixeln, die zu dem Nahbereichselemente 24a und dem Fernbereichselement 24b gruppiert sin. Die Ortsauflösung muss nicht notwendig nur für eine Unterteilung in Nah- und Fernbereich genutzt werden. Zum einen sind zusätzliche Trennstege und Entfernungsbereiche denkbar. Außerdem kann die Triangulation zu einer Entfernungsmessung statt zu einer Hintergrundausblendung verwendet werden, der Sensor 10 ist dann ein entfernungsmessender Triangulationstaster. Der Lichtempfänger 24 kann eine zusätzliche Ortsauflösung in Querrichtung aufweisen, der Triangulationseffekt tritt aber in der gezeigten Längsrichtung auf.

Figur 2 zeigt eine Prinzipdarstellung zur optischen Triangulation. Dabei sind Sendeoptik 14 und Empfangsoptik 22 vorerst noch als refraktäre Linsen dargestellt, um verschiedene abstandsabhängige Störeffekte oder Dynamiken zu illustrieren, die dann erfindungsgemäß durch das schon angesprochene und noch genauer zu erläuternde optische Metaelement verbessert werden. Zur Verdeutlichung des Basisabstands für die Triangulation sind die sendeseitige optische Achse 32 und die empfangsseitige optische Achse 34 zusätzlich eingezeichnet.

Die Systemempfindlichkeit eines optoelektronischen Sensors 10 nach dem Triangulationsprinzip hängt zunächst von verschiedenen Eigenschaften des Sensors 10 selbst ab, wie Lichtsender 14, Brennweiten von Sendeoptik 14 und Empfangsoptik 22 oder dem Basisabstand. Sie variiert darüber hinaus mit dem Abstand des jeweiligen Objekts. In Figur 2 ist ein Objekt beispielhaft in drei verschiedenen Abständen gezeigt, ein Objekt 36a in einem Fernbereich, ein Objekt 36b in einem Mittenbereich und ein Objekt 36c in einem Nahbereich. Was dies in absoluten Entfernungen bedeutet, kann sehr unterschiedlich sein und wird von der Auslegung des Sensors 10 und dem abzudeckenden Abstandsmessbereich beziehungsweise der Reichweite festgelegt. Das remittierte Lichtbündel 20a des Objekts 36a im Fernbereich, das remittierte Lichtbündel 20b des Objekts 36b im Mittenbereich und das remittierte Lichtbünde8 20c des Objekts 36c im Nahbereich fällt jeweils in einer Auftreffposition auf den Lichtempfänger 24, die einen Triangulationsversatz aufweist, aus dem sich der Objektabstand in Kenntnis der übrigen Geometrie rückrechnen lässt, insbesondere des Basisabstands. Das ist nochmals das grundlegende Triangulationsprinzip.

Allerdings ist die Empfindlichkeit je nach Objektabstand stark unterschiedlich. Die Änderung des Triangulationsversatzes bei einer Änderung des Objektsabstands ist im Nahbereich viel ausgeprägter als im Fernbereich. Der Triangulationsversatz korrespondiert mit dem Einfallswinkel auf die Empfangsoptik 22. Die Triangulationsempfindlichkeit ist nichtlinear, sie nimmt annähernd quadratisch ab. Gleiches gilt nochmals für den Empfangspegel. Somit hat ein nicht durch das erfindungsgemäße optische Metaelement kompensierter Sensor 10, der im Mittenbereich für eine gute Systemempfindlichkeit ausgelegt ist, im Fernbereich eine viel zu geringe und im Nahbereich eine viel zu hohe Systemempfindlichkeit.

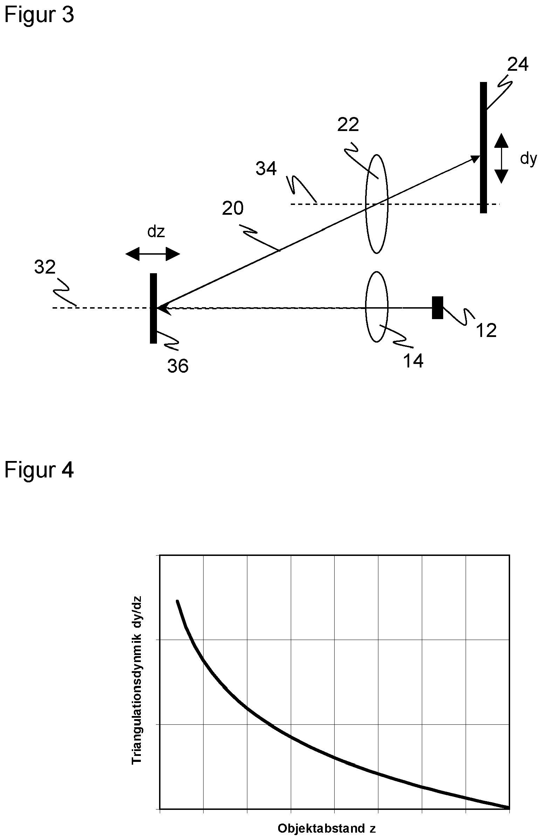

Figur 3 illustriert diese Triangulationsempfindlichkeit oder Triangulationsdynamik ein weiteres Mal. Wenn der mit z bezeichnete Abstand des Objekts 36 um dz variiert, verändert sich die Auftreffposition des Empfangslichtflecks auf dem Lichtempfänger 24 in dessen Längsrichtung y um dy. Je größer der Abstand des Objekts 36 in z-Richtung, desto geringer fällt der Triangulationseffekt oder die Variation dy bei gleicher Abstandsänderung dz aus.

Figur 4 veranschaulicht diese Aussage nochmals in einem Diagramm, in dem die Triangulationsdynamik dy/dz in Abhängigkeit von dem Objektabstand für eine beispielhafte Auslegung eines Sensors 10 aufgetragen ist. Die Darstellung ist logarithmisch. Für nahe Objektabstände z ist die Triangulationsempfindlichkeit um Größenordnungen höher als für ferne Objektabstände z, und dies lässt sich durch das optische Metaelement zumindest teilweise linearisieren.

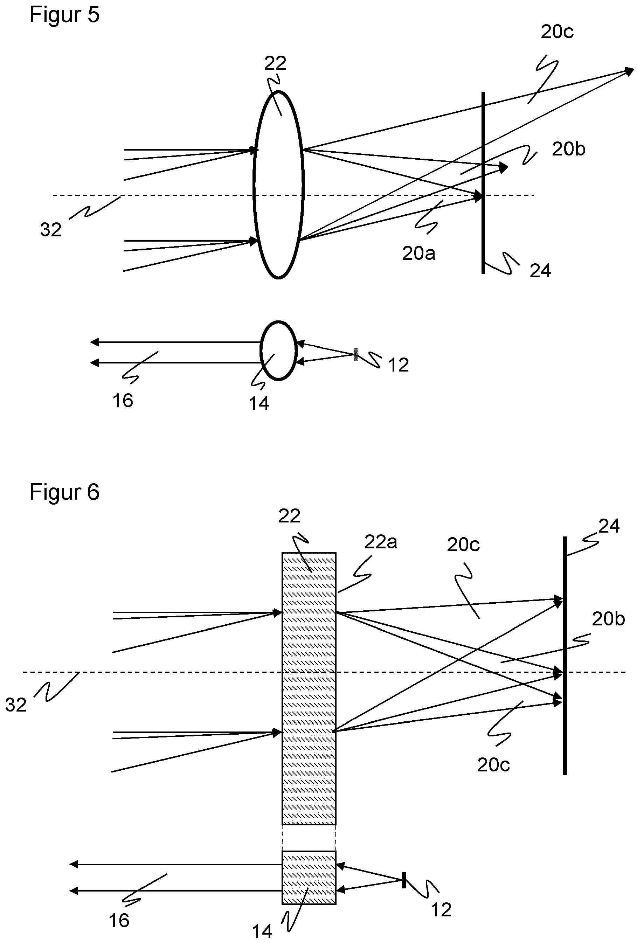

Figur 5 ist eine Prinzipdarstellung, die noch einen weiteren unerwünschten Effekt einer unkorrigierten Triangulation veranschaulicht. Die Empfangsoptik 22 ist hier so ausgelegt, dass bei einem fernen Objekt 36a beziehungsweise bei einem remittierten Lichtbündel 20a aus dem Unendlichen eine scharfe Abbildung auf dem Lichtempfänger 24 erzielt wird. Der Empfangslichtfleck ist demnach scharf abgebildet und insbesondere nahezu punktförmig. Gemäß der Abbildungsgleichung 1/f = 1/g+1/b, mit f Brennweite, g Gegenstandsweite und b Bildweite, werden die Abbildungen unscharf und die Empfangslichtflecken recht groß für das remittierte Lichtbündel 20b von einem Objekt 36b aus dem Mittenbereich oder gar das remittierte Lichtbündel 20c von einem Objekt 36c aus dem Nahbereich. Das kann die Auftreffposition verzerren, und außerdem kann ein Teil des Lichts in Querrichtung neben den Lichtempfänger 24 fallen und damit nicht detektiert werden.

Figur 6 zeigt eine schematische Darstellung einer Triangulationsanordnung mit einem optischen Metaelement 22 im Empfangspfad, das die Triangulationsdynamik und Größe des Empfangslichtflecks korrigiert. Das optische Metaelement 22 trägt das Bezugszeichen der Empfangsoptik der Figuren 1 bis 5, die es je nach Ausführungsform bildet, ersetzt oder ergänzt. Es erfüllt vorzugsweise zugleich die genannten Korrekturfunktionen. Das optische Metaelement oder ein weiteres optisches Metaelement kann ebenso die Sendeoptik 14 bilden, ersetzen oder ergänzen und ist deshalb in seinem unteren Teil mit deren Bezugszeichen versehen. Das Design des optischen Metaelements kann so gewählt werden, dass Lichtsender 12 und Lichtempfänger 24 auf einer gemeinsamen Elektronikkarte angeordnet sind.

Das optische Metaelement 22 weist eine Metaoberfläche 22a auf und ist insbesondere als Metalinse aufgebaut ("flat optics"). Alternativ oder ergänzend ist denkbar, dass bereits der Körper oder Träger des optischen Metaelements 22 ein Metamaterial aufweist, insbesondere das optische Metaelement 22 eine Spaceplate ist.

Herkömmliche optische Komponenten wie Linsen, Wellenplatten oder Hologramme beruhen auf der Lichtausbreitung über Entfernungen, die viel größer als die Wellenlänge des Lichtbündels 16, 22 sind, um Wellenfronten zu formen. Auf diese Weise werden entlang des Strahlengangs nach und nach wesentliche Änderungen der Amplitude, Phase oder Polarisation von Lichtwellen akkumuliert. Eine Metaoberfläche 22a hingegen weist Strukturen auf, die als Miniatur-Anisotrop-Lichtstreuer oder Resonatoren beziehungsweise optische Antennen aufgefasst werden können. Diese Strukturen haben Abmessungen und Abstände im Nanometerbereich, viel kleiner als die Wellenlänge des Lichtbündels 16, 22. Dadurch formt die Metaoberfläche 22a nach dem Huygens-Prinzip durch optische Wellenfronten in beliebige Formen mit Subwellenlängenauflösung, indem die Nanostrukturen räumliche Variationen in der optischen Reaktion der Lichtstreuer einführen. Damit lassen sich Effekte einer herkömmlichen Linse nachempfinden, aber auch Funktionalitäten von anderen optischen Komponenten, wie beispielsweise von Strahlteilern, Polarisatoren oder Beugungsgittern. Die Besonderheit ist die hohe Flexibilität, durch angepasste Nanostrukturen eine gewünschte Ausgangswellenfront und damit verschiedenste optische Effekt zu erreichen. Je nach Wellenlängenbereich werden Materialien mit einem geeigneten Transmissionsverhalten verwendet, beispielsweise Titandioxid, Siliziumnitrid oder Galliumphosphid im sichtbaren und Aluminiumnitrid im ultravioletten Spektralbereich sowie Chalkogenid-Legierungen im mittleren und Silizium im langwelligen Infrarotbereich.

Diese Überlegungen zu einer Metaoberfläche lassen sich auf ein Metamaterial übertragen, bei dem das Innere beziehungsweise der Träger entsprechende Nanostrukturen aufweist, wobei dies mit einer Metaoberfläche kombinierbar ist. Damit können insbesondere Spaceplates realisiert werden, die einen Lichtweg effektiv auf kleinerem Raum komprimieren, wozu nochmals ergänzend auf die einleitend zitierte Arbeit von Reshef et al. verwiesen wird. Das optische Metaelement 22 kann folglich eine Meta- oder Nanostruktur im Inneren und/oder auf der Vorder- und/oder Rückseite aufweisen.

Die Eigenschaften des optischen Metaelements 22 werden nun vorzugsweise so gewählt, dass die Brennweite eine Funktion des Einfallswinkels wird. Dazu wird die Metaoberfläche 22a entsprechend strukturiert und/oder für das optische Metaelement 22 ein Metamaterial gewählt, es insbesondere als Spaceplate ausgebildet. Mit einer Spaceplate ist die gewünschte Brennwinkelabhängigkeit vom Einfallswinkel gut realisierbar, beispielsweise durch Silizium- oder Siliziumoxid-Schichten als anisotropes Element zur einfallswinkelabhängigen Brennweitenvarianz

Der Einfallswinkel korrespondiert, wie zuvor dargelegt, mit dem Objektabstand. Eine weitere Designanforderung kann sein, dass für alle Objektabstände eine fokussierte Abbildung in die Empfängerebene des Lichtempfängers 24 erfolgt. Das Ergebnis ist eine zumindest abgemilderte Triangulationsdynamik, bei der auch Variationen dz des Objektabstands bei größeren Objektabständen z eine größere Variation dy der Auftreffposition des Empfangslichtflecks auf dem Lichtempfänger 24 bewirken. Zudem wird unabhängig vom Objektabstand auf den Lichtempfänger 24 fokussiert, die Variation der Empfangslichtfleckgröße mit dem Objektabstand entfällt oder wird wenigstens gemildert.

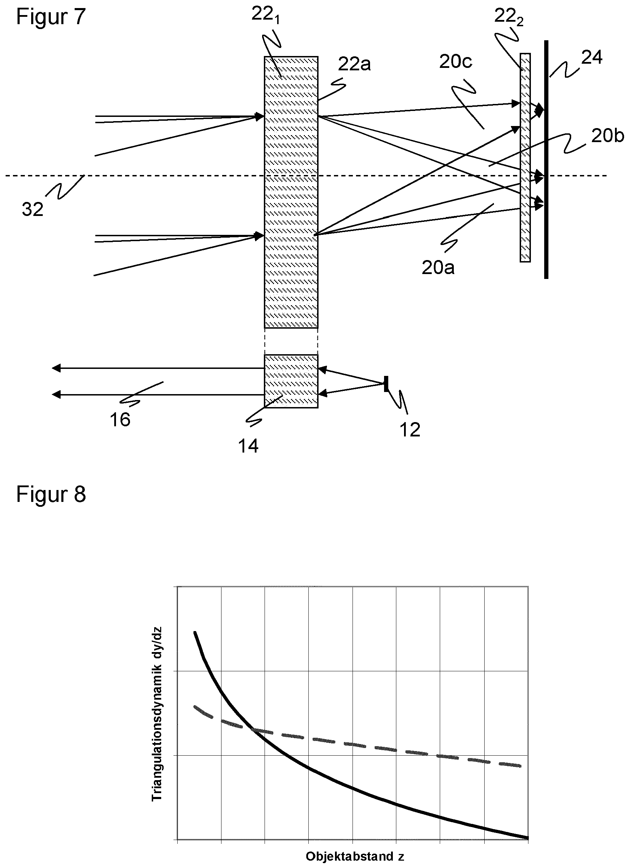

Figur 7 zeigt eine schematische Darstellung ähnlich Figur 6, in der das optische Metaelement 22 nun in zwei Teilelemente 22₁, 22₂ aufgeteilt ist. Beide Teilelemente können Metamaterial und/oder vorder- und/oder rückseitig eine Metaoberfläche 22a aufweisen. So lassen sich die Abbildungs- und Korrekturfunktionen verteilen. In diesem Beispiel wird die Triangulationsdynamik durch das erste Teilelement 22₁ und die Fokusanpassung durch das zweite Teilelement 22₂ mit einer ortsaufgelösten Übertragungsfunktion geleistet. Die verschiedenen Funktionen des optischen Metaelements 22, sei es als Metamaterial und/oder Metaoberfläche, insbesondere eine vom Einfallswinkel abhängige Brennweitenanpassung, können in dieser oder vergleichbarer Weise auf zwei oder mehr Teilelemente aufgeteilt werden. Dabei können Funktionen getrennt und jeweils einem Teilelement zugewiesen werden und/oder die Teilelemente einander in der Erfüllung derselben Funktion ergänzen.

Figur 8 zeigt nochmals die Triangulationsdynamik dy/dz in Abhängigkeit vom Objektabstand z. Die durchgezogene Linie ist eine Wiederholung der Figur 4 für den unkorrigierten Fall beispielsweise mit einer refraktiven Empfangsoptik 22 als Vergleich. Die gestrichelte Linie wird durch den erfindungsgemäßen Einsatz eines optischen Metaelements 22 erreicht. Es wird im Fernbereich eine deutlich größere Empfindlichkeit erzielt und zugleich im Nahbereich die sonst ungewollte hohe Empfindlichkeit deutlich reduziert. Das theoretische Ideal wäre ein flacher, konstanter Verlauf, und die Erfindung leistet einen sehr deutlichen Schritt in diese Richtung.

## Patentansprüche

1. Optoelektronischer Sensor (10) zur Erfassung eines Objekts (36) in einem Überwachungsbereich (18), der in einem Sendepfad einen Lichtsender (12) und eine dem Lichtsender (12) zugeordnete Sendeoptik (14) zum Aussenden eines Lichtbündels (16) und in einem Empfangspfad einen ortsauflösenden Lichtempfänger (24) und eine dem Lichtempfänger (24) zugeordnete Empfangsoptik (22) zum Empfangen des von dem Objekt (36) remittierten Lichtbündels (20), die ein optisches Metaelement (22) mit einer Metaoberfläche (22a) und/oder einem Metamaterial umfasst, sowie eine Steuer- und Auswertungseinheit (28) aufweist, die dafür ausgebildet ist, ein Empfangssignal des Lichtempfängers (24) auszuwerten,
**dadurch gekennzeichnet,**
**dass** der Sensor (10) als Lichttaster nach dem Prinzip der Triangulation ausgebildet ist und in dem Empfangspfad ein optisches Korrekturelement (22) aufweist, das zumindest einen von drei Störeffekten zumindest teilweise vergleichmäßigt, nämlich die im Nahbereich stark und im Fernbereich kaum noch mit Änderungen des Objektabstands variierende Auftreffposition eines Empfangslichtflecks auf dem Lichtempfänger (24), eine sich mit dem Objektabstand verändernden Empfangslichtfleckgröße und/oder einen mit dem Objektabstand abnehmenden Empfangspegel,
und **dass** das optische Metaelement (22) wenigstens teilweise die Funktion des optischen Korrekturelements aufweist.

2. Sensor (10) nach Anspruch 1,
wobei das optische Metaelement (22) eine Metalinse aufweist.

3. Sensor (10) nach Anspruch 1 oder 2,
wobei das optische Metaelement (22) eine Spaceplate aufweist.

4. Sensor (10) nach einem der vorhergehenden Ansprüche,
wobei das optische Metaelement (22) mindestens teilweise die Funktion der Empfangsoptik aufweist.

5. Sensor (10) nach einem der vorhergehenden Ansprüche,
wobei das optische Metaelement (22) eine Brennweite aufweist, die mit dem Einfallswinkel variiert, insbesondere monoton.

6. Sensor (10) nach einem der vorhergehenden Ansprüche,
wobei das optische Metaelement (22) das remittierte Lichtbündel (20) für alle über eine Reichweite des Sensors (10) auftretenden Einfallswinkel in die Lichtempfängerebene fokussiert.

7. Sensor (10) nach einem der vorhergehenden Ansprüche,
wobei das Metaelement (22) ein erstes Teilelement (22₁) für eine wenigstens teilweise Linearisierung der Abhängigkeit der Auftreffposition von einem Abstand des Objekts (36) und ein zweites Teilelement (22₂) für eine wenigstens teilweise Vergleichmäßigung einer Empfangslichtfleckgröße bei unterschiedlichen Abständen des Objekts (36) aufweist.

8. Sensor (10) nach einem der vorhergehenden Ansprüche,
wobei das optische Metaelement (22) wenigstens teilweise die Funktion sowohl der Empfangsoptik als auch des optischen Korrekturelements aufweist.

9. Sensor (10) nach einem der vorhergehenden Ansprüche,
wobei die Sendeoptik (14) ein zweites optisches Metaelement aufweist, wobei das optische Metaelement und das zweite optische Metaelement insbesondere als gemeinsames Metaelement (22) ausgebildet sind.

10. Sensor (10) nach einem der vorhergehenden Ansprüche,
der als hintergrundausblendender Lichttaster ausgebildet ist, bei dem der Lichtempfänger (18) einen Nahbereich (24a) und einen Fernbereich (24b) mit einem Trennsteg (26) dazwischen aufweist und der insbesondere einen Schaltausgang (30) aufweist, dessen Schaltzustand davon abhängt, ob ein Objekt (36) im Nahbereich (24a) erfasst ist oder davon, ob ein Objekt (36) im Fernbereich (24b) erfasst ist.

11. Verfahren zur Erfassung eines Objekts (36) in einem Überwachungsbereich (18), wobei in einem Sendepfad ein Lichtbündel (16) ausgesandt, das von dem (36) Objekt remittierte Lichtbündel (20) um einen Basisabstand versetzt in einem Empfangspfad über eine Empfangsoptik (22) wieder empfangen und daraus ein Empfangssignal erzeugt und das Empfangssignal ausgewertet wird, wobei das remittierte Lichtbündel (20) in dem Empfangspfad auf ein optisches Metaelement (20) mit einer Metaoberfläche (22a) und/oder einem Metamaterial trifft,
**dadurch gekennzeichnet,**
**dass** die Erfassung nach dem Prinzip der Triangulation erfolgt und dass in dem Empfangspfad ein optisches Korrekturelement vorgesehen ist, das zumindest einen von drei Störeffekten zumindest teilweise vergleichmäßigt, nämlich die im Nahbereich stark und im Fernbereich kaum noch mit Änderungen des Objektabstands variierende Auftreffposition eines Empfangslichtflecks auf dem Lichtempfänger (24), eine sich mit dem Objektabstand verändernde Empfangslichtfleckgröße und/oder einen mit dem Objektabstand abnehmenden Empfangspegel,
und **dass** das optische Metaelement (22) wenigstens teilweise als das optische Korrekturelement fungiert.

## Claims

1. An optoelectronic sensor (10) for detecting an object (36) in a monitoring area (18), comprising, in a transmission path, a light transmitter (12) and transmission optics (14) assigned to the light transmitter (12) for transmitting a light beam (16) and, in a reception path, a spatially resolving light receiver (24) and a reception optics (22) assigned to the light receiver (24) for receiving the light beam (20) remitted by the object (36), the reception optics comprising an optical meta element (22) having a meta surface (22a) and/or a meta material, and comprising a control and evaluation unit (28) configured to evaluate a reception signal of the light receiver (24)
**characterized in that** the sensor (10) is configured as a light sensor according to the principle of triangulation and comprises, in the reception path, an optical correction element (22) that at least partially compensates for one of three interference effects, namely the impact position of a received light spot on the light receiver (24) varying strongly in the near range and hardly at all in the far range with changes in the object distance, a received light spot size varying with the object distance, and/or a received light level decreasing with the object distance,
and **in that** the optical meta-element (22) at least partially has the function of the optical correction element.

2. The sensor (10) according to claim 1,
wherein the optical meta element (22) comprises a meta lens.

3. The sensor (10) according to claim 1 or 2,
wherein the optical meta element (22) comprises a spaceplate.

4. The sensor (10) according to any of the preceding claims,
wherein the optical meta-element (22) at least partially has the function of the receiving optics.

5. The sensor (10) according to any of the preceding claims,
wherein the optical meta-element (22) has a focal length that varies with the angle of incidence, in particular monotonically.

6. The sensor (10) according to any of the preceding claims,
wherein the optical meta element (22) focuses the remitted light beam (20) into the light receiving plane for all angles of incidence occurring over a range of the sensor (10).

7. The sensor (10) according to any of the preceding claims,
wherein the meta element (22) comprises a first sub-element (22₁ ) for at least partially linearizing the dependence of the incident position on a distance of the object (36) and a second sub-element (22₂ ) for at least partially equalizing a received light spot size at different distances of the object (36).

8. The sensor (10) according to any of the preceding claims,
wherein the optical meta element (22) at least partially has the function of both the receiving optics and the optical correction element.

9. The sensor (10) according to any of the preceding claims,
wherein the transmission optics (14) comprises a second optical meta element, wherein the optical meta element and the second optical meta element are in particular formed as a common meta element (22).

10. The sensor (10) according to any of the preceding claims,
which is configured as a background-suppressing light sensor, wherein the light receiver (18) has a near range (24a) and a far range (24b) with a separating web (26) between them, and which in particular comprises a switching output (30) whose switching state depends on whether an object (36) is detected in the near range (24a) or on whether an object (36) is detected in the far range (24b).

11. A method for detecting an object (36) in a monitoring area (18), wherein a light beam (16) is transmitted in a transmission path, the light beam (20) remitted by the (36) object is received again offset by a base distance in a reception path via a receiving optics (22) and a reception signal is generated therefrom and the reception signal is evaluated, wherein the remitted light beam (20) in the receiving path impinges on an optical meta-element (20) having a meta-surface (22a) and/or a meta-material,
**characterized in in that** the detection is carried out according to the principle of triangulation, and **in that** an optical correction element is provided in the reception path which at least partially compensates for one of three interference effects, namely the impact position of a received light spot on the light receiver (24) varying strongly in the near range and hardly at all in the far range with changes in the object distance, a received light spot size varying with the object distance, and/or a received light level decreasing with the object distance, and **in that** the optical meta element (22) functions at least partially as the optical correction element.

## Revendications

1. Capteur optoélectronique (10) pour détecter un objet (36) dans une zone de surveillance (18), comprenant, dans un chemin de transmission, un émetteur de lumière (12) et une optique de transmission (14) associée à l'émetteur de lumière (12) pour l'émission d'un faisceau de lumière (16) et, dans un chemin de réception, un récepteur de lumière (24) à résolution spaciale et une optique de réception (22) associée au récepteur de lumière (24) pour recevoir le faisceau lumineux (20) réémis par l'objet (36), qui comprend un méta-élément optique (22) avec une méta-surface (22a) et/ou un méta-matériau, ainsi qu'une unité de commande et d'évaluation (28) configurée pour évaluer un signal de réception du récepteur de lumière (24)
**caractérisé en ce que** le capteur (10) est configuré comme un capteur de lumière selon le principe de la triangulation et comporte, dans le chemin de réception, un élément de correction optique (22) qui compense au moins partiellement l'un des trois effets d'interférence, à savoir la position d'impact d'une tache lumineuse de réception sur le récepteur de lumière (24) variant fortement dans la zone d'induction et pratiquement pas dans la zone éloignée avec des modifications de la distance de l'objet, une taille de tache lumineuse de réception variant avec la distance de l'objet, et/ou un niveau de réception diminuant avec la distance de l'objet,
et **en ce que** le méta-élément optique (22) comporte au moins partiellement la fonction de l'élément de correction optique.

2. Capteur (10) selon la revendication 1,
dans lequel le méta-élément optique (22) comporte une méta-lentille.

3. Capteur (10) selon la revendication 1 ou 2,
dans lequel le méta-élément optique (22) comporte une plaque d'espacement.

4. Capteur (10) selon l'une des revendications précédentes,
dans lequel le méta-élément optique (22) comporte au moins partiellement la fonction de l'optique de réception.

5. Capteur (10) selon l'une des revendications précédentes,
dans lequel le méta-élément optique (22) comporte une distance focale qui varie avec l'angle d'incidence, en particulier de manière monotone.

6. Capteur (10) selon l'une des revendications précédentes,
dans lequel le méta-élément optique (22) focalise le faisceau lumineux réémis (20) dans le plan du récepteur de lumière pour tous les angles d'incidence apparaissant sur une portée du capteur (10).

7. Capteur (10) selon l'une des revendications précédentes,
dans lequel le méta-élément (22) comprend un premier sous-élément (22₁) pour une linéarisation au moins partielle de la dépendance de la position d'impact par rapport à une distance de l'objet (36) et un second sous-élément (22₂) pour égaliser au moins partiellement la taille d'une tache lumineuse de réception à différentes distances de l'objet (36).

8. Capteur (10) selon l'une des revendications précédentes,
dans lequel le méta-élément optique (22) comprend au moins partiellement la fonction à la fois de l'optique de réception et de l'élément de correction optique.

9. Capteur (10) selon l'une des revendications précédentes,
dans lequel l'optique de transmission (14) comprend un deuxième méta-élément optique, le méta-élément optique et le deuxième méta-élément optique étant notamment configurés comme un méta-élément commun (22).

10. Capteur (10) selon l'une des revendications précédentes,
qui est configuré comme un capteur de lumière supprimant l'arrière-plan, dans lequel le récepteur de lumière (18) comprend une zone d'induction (24a) et une zone éloignée (24b) avec une âme de séparation (26) entre elles, et qui comprend en particulier une sortie de commutation (30) dont l'état de commutation dépend du fait si un objet (36) est détecté dans la zone d'induction (24a) ou du fait si un objet (36) est détecté dans la zone éloignée (24b).

11. Procédé pour détecter un objet (36) dans une zone de surveillance (18), dans lequel un faisceau de lumière (16) est émis dans un chemin de transmission, le faisceau de lumière (20) réémis par l'objet (36) est reçu à nouveau décalé d'une distance de base dans un chemin de réception par une optique de réception (22) et un signal de réception est généré à partir de là et le signal de réception est évalué, dans lequel le faisceau de lumière réémis (20) dans le chemin de réception rencontre un méta-élément optique (20) avec une méta-surface (22a) et/ou un méta-matériau,
**caractérisé en ce que** la détection est effectuée selon le principe de la triangulation, et **en ce qu'**un élément de correction optique est prévu dans le chemin de réception qui compense au moins partiellement l'un des trois effets d'interférence, à savoir la position d'impact d'une tache lumineuse de réception sur le récepteur de lumière (24) variant fortement dans la zone d'induction et pratiquement pas dans la zone éloignée avec des modifications de la distance de l'objet, une taille de tache lumineuse de réception variant avec la distance de l'objet, et/ou un niveau de réception diminuant avec la distance de l'objet,, et **en ce que** le méta-élément optique (22) fait au moins partiellement fonction de l'élément de correction optique.
